# EUROPEAN PATENT SPECIFICATION

(11) **EP 3 743 803 B1**
(45) Date of publication and mention of the grant of the patent: **22.06.2022**
(21) Application number: 18727251.3
(22) Date of filing: 23.05.2018
(51) Int. Cl.: G06F 8/71, G06F 8/20, G06Q 10/06, G06Q 10/10

(54) **DEVICE AND SYSTEM FOR MODEL BASED VERSION MANAGEMENT OF ENTITY INSTANCES**
VORRICHTUNG UND SYSTEM ZUR MODELLBASIERTEN VERSIONSVERWALTUNG VON ENTITÄTSINSTANZEN
DISPOSITIF ET SYSTÈME DE GESTION DE VERSION BASÉE SUR UN MODÈLE D'INSTANCES D'ENTITÉS

(43) Date of publication of application: 02.12.2020
(73) Proprietor: HUAWEI TECHNOLOGIES CO., LTD., Shenzhen, Guangdong 518129 (CN)
(72) Inventor: LV, Peng, 80992 Munich (DE); DE MATTEIS, Luca, 80992 Munich (DE); PUGGELLI, Gianluca, 80992 Munich (DE); CAM, Osman, 80992 Munich (DE); THIYAGARAJAH, Janakiraman, 80992 Munich (DE)
(74) Representative: Roth, Sebastian
(86) International application number: PCT/EP2018/063515
(87) International publication number: WO 2019/223863

(56) References cited:
- US-A1- 2014 082 601
- CHRISTELLE URTADO ET AL: "Complex entity versioning at two granularity levels", INFORMATION SYSTEMS., vol. 23, no. 3-4, 1 May 1998 (1998-05-01), pages 197-216, XP055545323, GB ISSN: 0306-4379, DOI: 10.1016/S0306-4379(98)00009-X

## Description

### TECHNICAL FIELD

The present invention relates to the field of hierarchical management and provides a device and a system for version management of entity instances with a distributed relationship. The version management, provided by the device and system is model driven, in particular based on an entity model and on a version model.

### BACKGROUND

In a conventional hierarchical management system (e.g. an infrastructure management system or an operations support system (OSS)), a management node manages entity instances, wherein an entity instance managed by the node may have a relationship with an entity instance managed by another node. Entity instances managed by nodes are subject to changes during their lifecycle, wherein the relationships between entity instances or nodes may also change.

For example, when performance degradation of a service instance (i.e. an entity instance that provides a predefined service) occurs, immediate attention of an administrator is desired, to check what error occurred and what changes to the service instance were performed or occurred on the service instance, that led to the error. Thus, there is a need to track the history of changes of entity instances that are distributed across nodes, including relationship changes. In particular, a version change of a service instance has to be inspected.

A service instance (e.g. a root or parent instance) may be composed of several child service instances (i.e. the service instance has relationships with the child service instances), which may have their own history of changes. Some of the changes of the child service instances can impact, e.g. lead to the performance degradation, of the parent service instance.

Hence, tracking the changes of only a parent service instance to analyze an impact of a change, is not sufficient. It is required to track history of changes of all related child service instances that have an impact on a parent service instance.

In the prior art, there are various version management systems for tracking versions at different levels, which also support tracking history of changes of all related child service instances of a root service instance. But each of these solutions is restricted to tracking changes only with a predefined, particular scope, which typically is hardcoded in the system and cannot be flexibly changed.

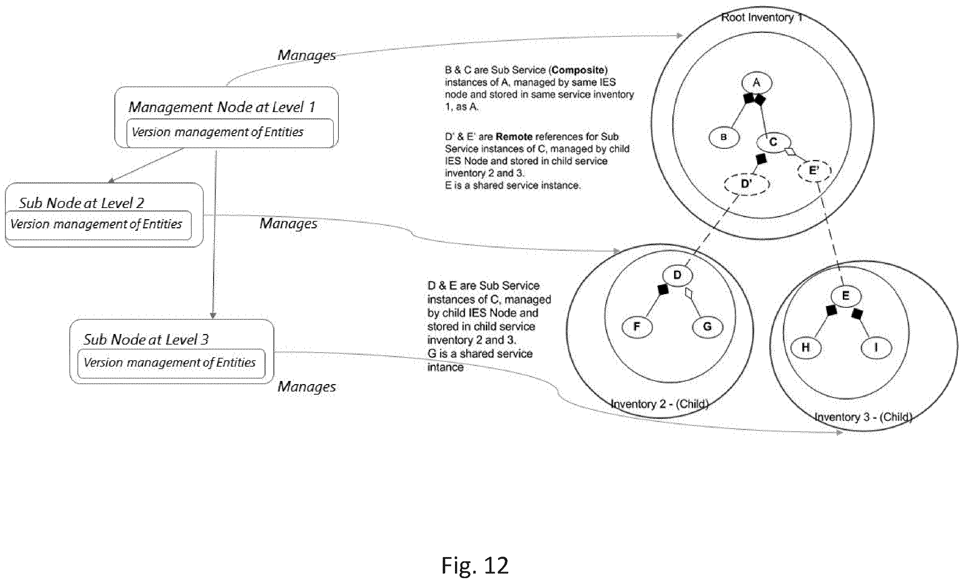

FIG. 12 shows a schematic view of version management of service instances according to the prior art.

As it is shown in Fig. 12, instances A, B, C, D, E, F, G, H, and I are instances of service entities that are located in different inventories, wherein service A is composed of sub-services B and C. C in turn is composed of child sub-services D and E. D' and E' are remote references of the instances D and E respectively, which are stored in other inventories. Each inventory is managed by a separate node, respectively sub node, which performs version management of the respective service instances.

The following table shows ownerships of the service instances, that are distributed across different inventories:

| Service Instance | Stored in | Life cycle managed by |
|---|---|---|
| A, B, C | Inventory 1 - Root | Inventory 1 - Root |
| D, F, G | Inventory 2 - Child | Inventory 2 - Child |
| E, H, I | Inventory 3 - Child | Inventory 3 - Child |

The relationships between A to I as shown in Fig. 12 follow a model approach. When interpreting Fig. 12 as a model, A to I are entities and the relationships shown between the entities follow a unified markup language (UML) representation. The concept as shown in Fig. 12 however can also be interpreted as a logic representation of a model, e.g. a representation of an implementation of a distributed system. In this case, A to I are entity instances (e.g. service instances that are provided to a user).

The relationships shown between the entity instances follow the UML representation of strong composition and shared aggregation. That is, in the example shown in Fig. 12, any change to service instance E or G does not have direct impact on service instance A, as they are in a shared relationship. Hence, the change in E or G is not expected to have impact on the versioning of service instance A.

Any change to service instance C, B, D, or F, however, has direct impact on Service A, as they are in strong composition relationship. Hence, any change in C, B, D, or F is expected to have an impact on the versioning of Service A.

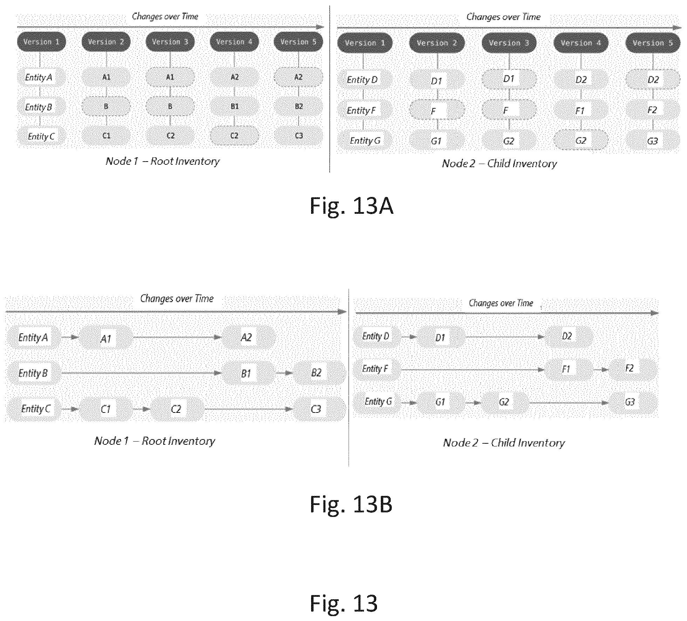

A solution known from the prior art is a time based snapshot versioning system, as it is shown in Fig. 13A.

In this approach, when a change is detected to any entity instance in the system, for example to instance B, C or G, a version is assigned to a snapshot of all the entity instances at that particular point of time. Further, a new version is assigned to the snapshot of all the entities at regular intervals or when a new change occurs.

When performance degradation of a service occurs, to trace detailed configuration changes of the service instances that are related to the service, all the versions prior to the point of detecting the service performance degradation need to be analyzed. That is, the configuration changes of all service instances in all snapshots prior to the point of detection of the service performance degradation need to be analyzed. This involves huge effort and still does not provide any guarantee that the error is located.

More severely, if there are N service instances in a service tree, and if each of them goes through M changes at different points of time, then there need to be N^{∗}M snapshots to be created in total, wherein each snapshot covers all service instances in the service tree. That is, complexity for analyzing is of order N^{∗}M. This leads to a huge effort required to analyze the configuration changes of all the entity instances in each snapshot. Total cost of ownership to resolve the problem is thus very high. Further, snapshots taken in the child inventories also need to be analyzed. This adds further complexity.

A main drawback of this prior art solution however is that there is no option for version control of a subset of entity instances, which are related. There is no possibility to consider relationships across the versions maintained at different nodes.

Another solution known from the prior art is an individual entity-based snapshot versioning system, as it is shown in Fig. 13B.

In this approach, for every change in any entity instance, a new version is assigned to the entity instance, independent from other entity instances.

When e.g. service instance B is modified, which can be either a property change or a service composition change, a new version is assigned to the service instance. It doesn't create a new version for parent service A. Also, when service instance D is changed in a child inventory, a new version is created only for D and no new version for its parent service instance C is created.

When a service performance degrades, to trace the detailed configuration changes of the service instances that are related to the service, the versions of all the service instances in the service instance tree, prior to the point of detection of the service performance degrade, need to be analyzed. This involves huge effort.

If there are N service instances in the service tree, and if each of them goes through M changes, then, there will be a total of N^{∗}M versions created, with each version covering only a specific service instance associated with the version.

An effort required to analyze the configuration changes of the versions of all service instances in the service tree, irrespective of the impact, again is very high. Total cost of ownership to resolve this problem is very high. Further, the snapshots taken in the child inventories also need to be analyzed. This also adds further complexity. Again, there is no option to have version control for a subset of the entity instances, which are related.

No relationship across the versions maintained at different nodes is considered. When there is a change in the scope or level of tracking, then a conventional version control system needs to be modified or re-developed and deployed, which increases total cost of ownership. When there is a change in entity instance across nodes, overall history of changes across nodes is not tracked effectively.

That is, there is a need for versioning management of entity instances, that can be precisely and flexibly configured to consider a desired scope of entity instances for versioning.

CHRISTELLE URTADO ET AL, "Complex entity versioning at two granularity levels", INFORMATION SYSTEMS., GB, vol. 23, no. 3-4, describes a complex entity version management model that combines a macroscopic and a microscopic level for the management of complex entity versions, depending on the granularity of the versioned entities.

US2014082601A1 discloses copy management of process versions over a lifecycle.

### SUMMARY

In view of the above-mentioned problems and disadvantages, the present invention aims to improve the conventional versioning management systems. The present invention has the object to provide a device for version management that supports versioning of changes in a scope entity instances defined by predefined policies. That is, a subset of entity instances is considered for versioning according to a predefined policy. The policy is stored in models. The present invention further has the object to support versioning of changes of entity instances distributed across different nodes. Further, it allows for adopting a versioning model to track history of changes applied to a service offered to a customer. For example, when many sub-service instances or resources are involved in offering a service to a customer, only changes applied to a few service instances may lead to an impact on the service offered to customer. Only these few service instances are included in version, in such a case. Further, the present invention provides a better view for comparison of related service entities that affect the service.

The present invention is defined by the independent claims. Additional features of the invention are provided in the dependent claims. In the following, parts of the description and drawings referring to embodiments which are not covered by the claims are not presented as embodiments of the invention, but as examples useful for understanding the invention.

To describe the present invention, the following list provides terms and their respective definitions used in this document:
- Model: A model is an artificial concept that can be used to express information, knowledge or systems in a structure that is defined by a consistent set of rules. The rules are used for interpretation of the meaning of components in the structure. In other words, a model is a representation of a system using general rules and concepts. This can e.g. be UML. The model as used in the present invention also supports the concepts of model and meta-model according to the Meta Object Facility (MOF).

- Entity: A logic representation in a model of an element that is included in the scope of a system. An entity may have properties. It can go through changes during its lifecycle. An entity can e.g. be a service, a resource, or any kind of product (i.e. a contract good).
- Activation: A process that makes a resource or service operationally available with a requested configuration.
- Configuration: When used as a noun, this is data and instructions to a resource to activate a service with pre-defined characteristics. When used as a verb, this is the injection of the data and instructions to a resource or service.
- Resource Controller: A logical layer abstracting resources under its control. The purpose of a controller is to present a common interface for the management of resources.
- Creation Request: A request to create a service instance from a service type, including parameters to meet dependencies and its configuration.
- Service Fulfillment: A process responsible for assembling and making services available to subscribers, tenants and 3rd parties.
- Orchestrator: A logical layer abstracting and automating the fulfillment of complex service operations and requests from subscribers, tenants and 3rd parties, in an operator's network or management domain.
- Plan: A series of steps that represent a workflow with the purpose of fulfilling an orchestration request within the context of existing services and resources at the time of a plan's creation. A plan is a decomposition into steps for the fulfillment of a service request based on a service model and a resource requirement.
- Policy: A policy is a formal statement whose purpose is to govern the management of services and resources during their life-cycle. It controls or modifies how a service or resource operation is fulfilled and how the service is formed. It manages life-cycle events in the scope of a service or resource.
- Provisioning: The action of providing resources for a resource request to support a service.
- Resource: A resource is an element in an enterprise's infrastructure utilized by a service or a goods procured by the market in the form of product. Services are generally hosted on resources.
- Service: A service is a realization of a product or something provided in support of a product. It represents the technical or engineering and implementation view of the product. Product offering is sold to customers, and service is implemented to help realize this product. More specifically, a customer facing service (CFS) is a part of a product that is bought by a customer, while a resource facing service (RFS) is indirectly part of a product but is invisible to a customer; it exists to support one or more CFSs.
- Service Instance / entity instance: A logical representation of a running service that has started its life-cycle, and thus has resources allocated to it. The resources may be just reserved or provisioned, but an allocation has taken place. Service instances are available in the inventory either as a resource reservation or as a running instance. An instance in particular is a logical or physical representation of an entity, that is described in a model.
- Workflow: A managed execution of a plan's steps through which a request is being fulfilled. The steps may be sequential, parallel, distrusted, local, optional, automated, or manual. It is the job of the workflow to organize and determine the execution of the steps and ensure the reliability and correctness of the execution. If a workflow cannot be successfully executed, the affected systems must always be in a consistent state.

The objective of the present invention is achieved by the solution provided in the enclosed independent claims. Advantageous implementations of the present invention are further defined in the dependent claims.

A first aspect of the present invention provides a device for version management of a plurality of entity instances, the device comprising a processor configured to read an entity model and a versioning model from a storage, wherein the entity model describes a plurality of entities and a relationship of each entity in the plurality of entities, and wherein the versioning model describes a relationship for versioning of entities in the entity model, generate an instance versioning model, based on the entity model and the versioning model, wherein the instance versioning model describes a relationship of a first entity instance and a second entity instance, assign, in case of a version change of the first entity instance or the second entity instance, a new version to the first entity instance, based on the instance versioning model, and store the new version in the storage.

Generating an instance versioning model, based on the entity model and the versioning model, is beneficial as the instance versioning model allows to precisely adjust which entity instances are considered for versioning, and only a version change of the entity instances defined in the instance versioning model leads to assigning a new version to the respective entity.

When many entity instances (e.g. services, sub-services or resources) are involved in offering a service to a customer, only changes at a few entity instances may lead to an impact on the service offered to customer. Adopting an instance versioning model helps to track history of changes that are subject to the service offered to a customer.

The device for version management allows for a better overview and comparison of only those entity instances that affect a provided service.

When a problem is reported in a management system and re-planning of a service configuration or optimization of a service is required, the analysis of a history of configurations that led to the problem can be analyzed effectively by selecting the history only of entity instances that are related to the provided service.

When a service is shared across multiple customers, the instance versioning model can be created for different customers, which increases flexibility of version management.

In an implementation form of the first aspect, the device is further configured to receive entity information provided to the device, wherein the entity information includes version information regarding the first entity instance and/or the second entity instance.

In a further implementation form of the first aspect, the processor is further configured to determine the version change of the first entity instance or the second entity instance, based on the entity information.

In a further implementation form of the first aspect, the processor is further configured to assign the new version to the first entity instance based on the entity information.

In a further implementation form of the first aspect, the new version includes version information regarding the first entity instance and the second entity instance.

Entity information that is provided to the device may be any kind of information that describes a present status or configuration of an entity instance, and thus advantageously allows for determining a version change of an entity instance. The entity information can be provided to the device by means of any communication method, e.g. a shared storage, or network communication.

In a further implementation form of the first aspect, the second instance is a child instance and the first instance is a parent instance, directly or indirectly depending on the child instance.

In a further implementation form of the first aspect, the dependency of the parent instance on the child instance is described by means of a tree structure in the instance versioning model.

This is beneficial because it allows for versioning of parent and child instances, i.e. instances that are dependent on each other, represented by means of a tree structure, and together provide a service to a user.

In a further implementation form of the first aspect, the entity model further describes at least one inventory being a logical or physical unit to which entities or entity instances can be assigned.

This allows for precisely adjusting in the entity model, which entity instances are considered for versioning, wherein the entity instances are distributed across several inventories.

In a further implementation form of the first aspect, the entity model further describes a first inventory, and wherein the first entity instance and the second entity instance are assigned to the first inventory.

In a further implementation form of the first aspect, the entity model further describes a first inventory and a second inventory, wherein the first entity instance is assigned to the first inventory, and wherein the second entity instance is assigned to the second inventory.

This is in particular beneficial, as entity instances can be included in versioning, that are either located in a same inventory, or are distributed across several inventories.

In a further implementation form of the first aspect, a relationship of the first entity instance and the second entity instance corresponds to a relationship defined in the entity model and to a relationship defined in the versioning model.

The information in the entity model generally defines how entity instances are composed to provide a predefined service, while the versioning model defines, which of the entities in the entity model are included in versioning. The fact that a relationship of the first entity instance and the second entity instance corresponds to a relationship defined in the entity model and to a relationship defined in the versioning model advantageously allows for model based adjusting of versioning of entities in the device.

In a further implementation form of the first aspect, an entity includes a service and/or a resource and/or a product.

This is in particular beneficial, as various types of entities, such as services, resources or products, can be subject to versioning.

A second aspect of the present invention provides a method for version management of a plurality of entity instances, the method comprising the steps of reading an entity model and a versioning model from a storage, wherein the entity model describes a plurality of entities and a relationship of each entity in the plurality of entities, and wherein the versioning model describes a relationship for versioning of entities in the entity model, generating an instance versioning model, based on the entity model and the versioning model, wherein the instance versioning model describes a relationship of a first entity instance and a second entity instance, assigning, in case of a version change of the first entity instance or the second entity instance, a new version to the first entity instance, based on the instance versioning model, and storing the new version in the storage.

In an implementation form of the second aspect, the method further includes the step of receiving entity information provided to the device, wherein the entity information includes version information regarding the first entity instance and/or the second entity instance.

In a further implementation form of the second aspect, the method further includes the step of determining the version change of the first entity instance or the second entity instance, based on the entity information.

In a further implementation form of the second aspect, the method further includes the step of assigning the new version to the first entity instance based on the entity information.

In a further implementation form of the second aspect, the new version includes version information regarding the first entity instance and the second entity instance.

In a further implementation form of the second aspect, the second instance is a child instance and the first instance is a parent instance, directly or indirectly depending on the child instance.

In a further implementation form of the second aspect, the dependency of the parent instance on the child instance is described by means of a tree structure in the instance versioning model.

In a further implementation form of the second aspect, the entity model further describes at least one inventory being a logical or physical unit to which entities or entity instances can be assigned.

In a further implementation form of the second aspect, the entity model further describes a first inventory, and wherein the first entity instance and the second entity instance are assigned to the first inventory.

In a further implementation form of the second aspect, the entity model further describes a first inventory and a second inventory, wherein the first entity instance is assigned to the first inventory, and wherein the second entity instance is assigned to the second inventory.

In a further implementation form of the second aspect, a relationship of the first entity instance and the second entity instance corresponds to a relationship defined in the entity model and to a relationship defined in the versioning model.

In a further implementation form of the second aspect, an entity includes a service and/or a resource and/or a product.

The method of the second aspect and its implementation forms include the same advantages as the device according to the first aspect and its implementation forms.

A third aspect of the present invention provides a system for version management of a plurality of entity instances, wherein the system comprises a storage, a first device according to the first aspect or any one of its implementation forms, and a first entity instance and a second entity instance.

In an implementation form of the third aspect, the first device is configured to receive entity information including version information regarding the first entity instance from the storage.

In a further implementation form of the third aspect, the system further comprises a second device according to the first aspect or any one of it implementation forms, and wherein the first device and the first entity instance are assigned to a first inventory, the second device and the second entity instance are assigned to a second inventory, and the first device is configured to receive entity information including version information regarding the second entity instance from the second device.

The system of the third aspect and its implementation forms include the same advantages as the device according to the first aspect and its implementation forms.

A fourth aspect of the present invention provides a method for operating a system for version management of a plurality of entity instances, wherein the system comprises a storage, a first device according to the first aspect or any one of its implementation forms, and a first entity instance and a second entity instance, wherein the method comprises the step of receiving, by the first device, entity information including version information regarding the first entity instance from the storage.

In an implementation form of the fourth aspect, the system further comprises a second device according to the first aspect or any one of its implementation forms, wherein the first device and the first entity instance are assigned to a first inventory, the second device and the second entity instance are assigned to a second inventory, and the method further comprises the step of receiving, by the first device, entity information including version information regarding the second entity instance from the second device.

The method of the fourth aspect and its implementation forms include the same advantages as the device according to the first aspect and its implementation forms.

A fifth aspect of the present invention provides a storage storing a data structure, the data structure including an entity model and a versioning model, wherein the entity model describes a plurality of entities and a relationship of each entity in the plurality of entities, and wherein the versioning model describes a relationship for versioning of entities in the entity model.

In an implementation form of the fifth aspect, the entity model further includes a version container model for storing at least one version container instance in a version container entity, wherein the version container instance relates to a version of an entity instance.

The Storage of the fifth aspect and its implementation forms include the same advantages as the device according to the first aspect and its implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above-described aspects and implementation forms of the present invention will be explained in the following description of specific embodiments in relation to the enclosed drawings, in which:
- FIG. 1: shows a schematic view of a device according to an embodiment of the present invention.
- FIG. 2: shows a schematic view of a device according to an embodiment of the present invention in more detail.
- FIG. 3: shows a schematic view of a device according to an embodiment of the present invention in more detail.
- FIG. 4: shows a schematic view of a system according to an embodiment of the present invention.
- FIG. 5: shows a schematic view of a system according to an embodiment of the present invention in more detail.
- FIG. 6: shows a schematic view of an operating manner of the device or system according to an embodiment of the present invention.
- FIG. 7: shows a schematic view of associating a version to a service instance.
- FIG. 8: shows a schematic view of a version container model.
- FIG. 9: shows schematic views of an entity model and of an instance versioning model.
- FIG. 10: shows a schematic view of a method for version management.
- FIG. 11: shows a schematic view of a storage storing a data structure according to an embodiment of the present invention.
- FIG. 12: shows a schematic view of version management of service instances according to the prior art.
- FIG. 13: shows a schematic view of versioning systems according to the prior art.

### DETAILED DESCRIPTION OF THE EMBODIMENTS

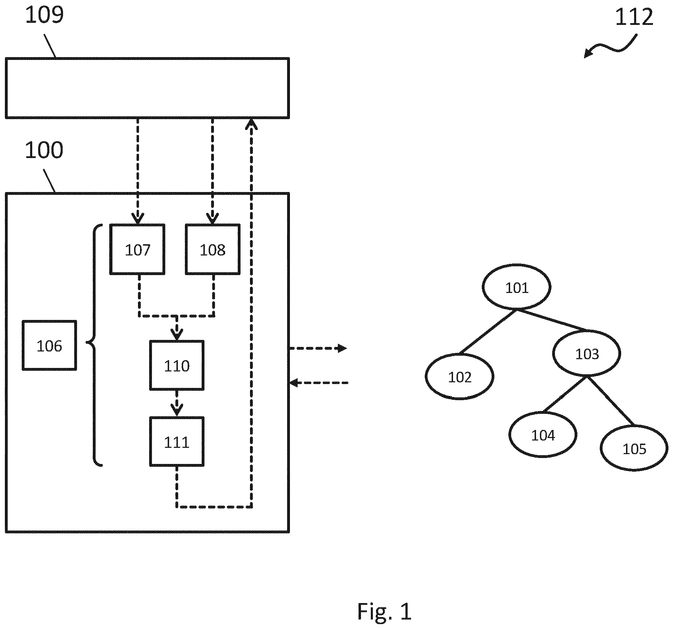

FIG. 1 shows a schematic view of a device 100 according to an embodiment of the present invention. The device 100 is for version management of a plurality of entity instances 101, 102, 103, 104, 105, which are not part of the device. The device 100 is however configured to communicate with the entity instances 101, 102, 103, 104, 105 by means of network communication, or e.g. a shared storage.

As it is shown in Fig. 1, the device 100 comprises a processor 106 that is configured to read an entity model 107 and a versioning model 108 from a storage 109. The storage 109 can also be accessed by the entity instances 101, 102, 103, 104, 105 for exchanging information. The storage 109 is not part of the device 100.

The entity model 107 describes a plurality of entities and a relationship of each entity in the plurality of entities. In other words, the entity model 107 generally defines how entity instances are composed (including a function of each entity and also relationships with other entities) in a present operating scenario to provide a predefined service.

The versioning model 108 describes a relationship for versioning of entities in the entity model. That is, the versioning model 108 defines, which of the entities in the entity model 107 are included in versioning.

The processor 106 is further configured to generate an instance versioning model 110, based on the entity model 107 and the versioning model 108. The instance versioning model 110 in general describes, which entity instances are included in versioning, i.e. the history of which entity instances is tracked. To this end, the instance versioning model 110 describes a relationship of a first entity instance 101 and a second entity instance 102, wherein the changes of these two entity instances are going to be tracked by the device 100.

The device is further configured to assign, in case of a version change of the first entity instance 101 or the second entity instance 102, a new version 111 to the first entity instance 101, based on the instance versioning model 110, and store the new version 111 in the storage 109.

The device 100, the first entity instance 101, the second entity instance 102 and the storage 109 form a system for version management 112 according to an embodiment of the present invention. In the system 112 the device 100 is configured to receive entity information 201 including version information regarding the first entity instance 101 from the storage 109.

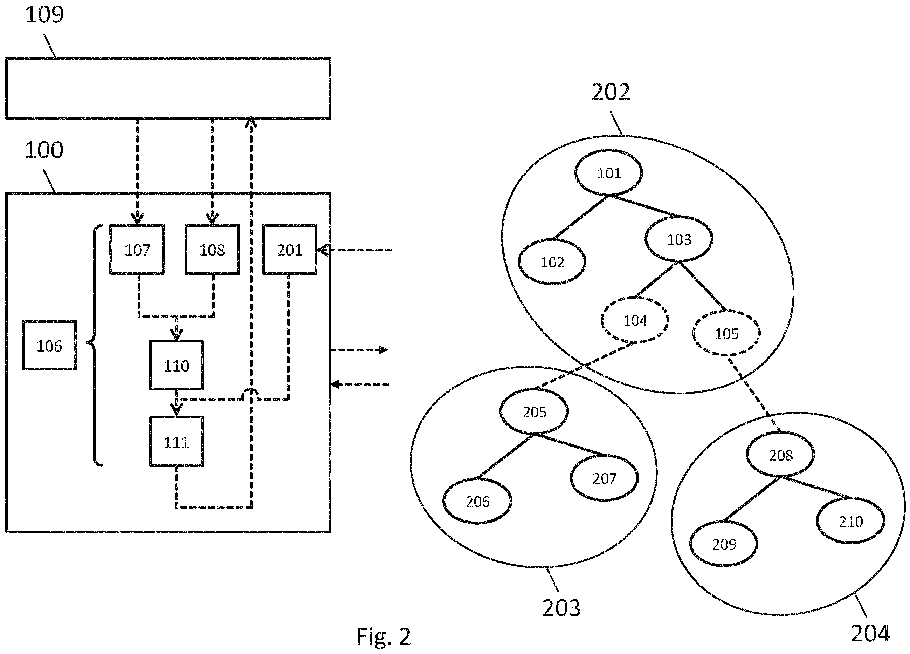

FIG. 2 shows a schematic view of the device 100 according to an embodiment of the present invention in more detail. The device 100 as shown in Fig. 2 includes all features and functionality of the device 100 as described in view of Fig. 1. To this end, similar features are labelled with similar reference signs. All features that are additionally described in view of Fig. 2 are optional features.

As it is shown in Fig. 2, the device 100 is further configured to receive entity information 201. The entity information 201 is provided to the device 100 by the entity instances 101, 102, 103, 104, 105, e.g. by means of network communication or a shared storage. The entity information 201 includes version information regarding the first entity instance 101 and/or the second entity instance 102. The version information includes information regarding a composition, a state or a configuration of an entity instance. That is, the processor 106 is able to determine the version change of the first entity instance 101 or the second entity instance 102, based on the entity information 201.

After a version change is determined, the processor 106 can assign a new version 111 to the first entity instance 101 based on the entity information 201. Alternatively, the processor can assign the new version to the second entity instance 102, or to both instances 101, 102.

The new version 111 can include version information regarding the first entity instance 101 and/or the second entity instance 102. That is, the new version is in particular determined based on the entity information, more specifically on the version information in the entity information 201.

The device 100 is in particular able to determine version changes of services which are composed of instances that are structured or related in a hierarchical manner. That is, the second instance 102 can be a child instance and the first instance can be a parent instance 101, directly or indirectly depending on the child instance 102. In other words, an operation of the parent instance 101 depends on an operation of the child instance 102. The dependency of the parent instance 101 on the child instance 102 is described by means of a tree structure in the instance versioning model 110.

Optionally, the entity model 107 may further describe at least one inventory 202, 203, 204 being a logical or physical unit to which entities or entity instances 101, 102, 103, 104, 105, 205, 206, 207, 208, 209, 210 can be assigned. Speaking in terms of modelling, the inventory 202, 203, 204 is a logical unit to which entities or entity instances can be assigned, e.g. to associate them to a predefined domain. In terms of a physical representation of the model, the inventory 202, 203, 204 is a physical organizational unit to which entity instances are assigned, e.g. for management purposes. A management node in an inventory 202, 203, 204 can manage entity instances that are associated to the inventory.

Optionally, the entity model 107 can describe a first inventory 202, and the first entity instance 101 and the second entity instance 102 are assigned to the first inventory 202. In other words, the device 100 is capable of version management of entity instances that are located in a same inventory 202.

Further optionally, the entity model 107 can describe a first inventory 202 and a second inventory 203, wherein the first entity instance 101 is assigned to the first inventory 202, and wherein the second entity instance 206 is assigned to the second inventory 203. That is, the device 100 is also capable of version management of entity instances, that are located in different inventories 202, 203.

More specifically, the relationship of the first entity instance 101 and the second entity instance 102 corresponds to a relationship defined in the entity model 107 and to a relationship defined in the versioning model 108. That is, the entity model 107 describes how a provided service is composed of entity instances, while on the other hand the versioning model 108 defines, which of those instances are included in a versioning process.

Throughout the present invention and its embodiments, an entity in particular may include a service and/or a resource and/or a product.

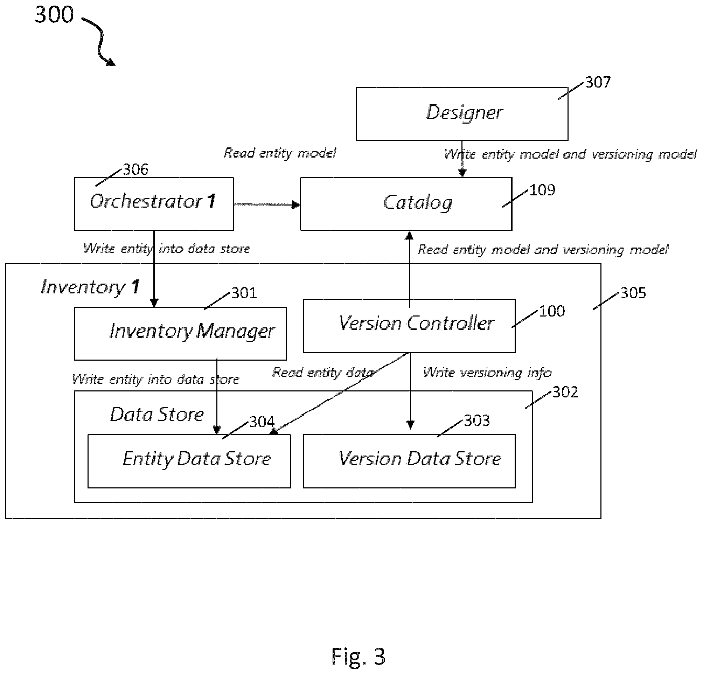

FIG. 3 shows a schematic view of a device 100 according to an embodiment of the present invention in more detail. The device includes all features and functionality as described above. The concept of version management driven by an entity model 107 and a versioning model 108 is now in particular described in view of an inventory system 300, in which the device 100 is called a version controller 100. The system 300 further includes an inventory manager 301 that is configured to receive requests from a orchestrator 306 (or service orchestrator), to create or modify entity instances, which are stored in an entity data store 304 within a data store 302. Any write operation on any entity instance follows a write ahead log (WAL) approach. Every change to an entity instance is written to a log. Versioning and retrieval of a specific version of an entity instance is handled by the version controller 100.

The service orchestrator 306 uses a user defined service model and a user defined resource model to perform management operations that involve coordination of various system parts on which services and resources are decomposed. The service model and the resource model must be compliant with a service meta-model and resource meta-model and follow the semantics of the respective meta-model. That is, these models and meta models comply with the MOF as described above. The service meta-model and the resource meta-model describe in detail which elements belong to a domain and how they are composed to carry on a service business logic. The meta-models incorporate precise semantics on how the service orchestrator 306 interprets and constructs dependencies. The meta-models are formalized in UML, but a domain specific language (DSL) is supported to facilitate the service description.

As shown in Fig. 3, a catalog 109 (or master catalog) stores the service model and the resource model, which can be defined by a service designer 307. The master catalog 109 can in particular be the storage 109 as described in view of Fig. 1. The service designer is a tool used by designers (i.e. users) to define the service model.

In Fig. 3, an inventory 305, in addition to the above definition, is a software component that stores entities and/or entity instances and maintains a change history of the entities and/or entity instances.

The version controller 100 shown in Fig. 3 is the device 100, being a software component inside the inventory 305 that helps in managing versions of the entity instances when they go through changes. The version controller 100 is primarily responsible for the versioning system 300 and for storing versions in a so called version container (which is going to be described below).

Key inputs to the version controller 100 are: An entity model 107 (e.g.: a service entity model), mostly defined at design time. A versioning model 108 (e.g.: a service versioning model), mostly defined at design time. An instance versioning model 110 (e.g: service instance versioning model), mostly defined at run time, i.e. generated based on the entity model 107 and on the versioning model 108. An optional entity instance change log, mostly defined at run time.

The version controller 100 is involved in the following high-level processes: The version controller 100 receives events about a change in an entity instance. The version controller 100 can either read a change log to detect a service instance change or can directly receive a request to store service instances. The version controller 100 creates a version container and entity instance versions based on the instance versioning model 110. The version container is stored in the data store 302.

Entity instances are stored in the entity data store 304 of the data store 302, while versioning information is stored in the version data store 303 of the data store 302. The catalog 109, which stores the entity model and the versioning model, and is illustrated as a separate storage in Fig. 3 can also be implemented as part of the data store 302.

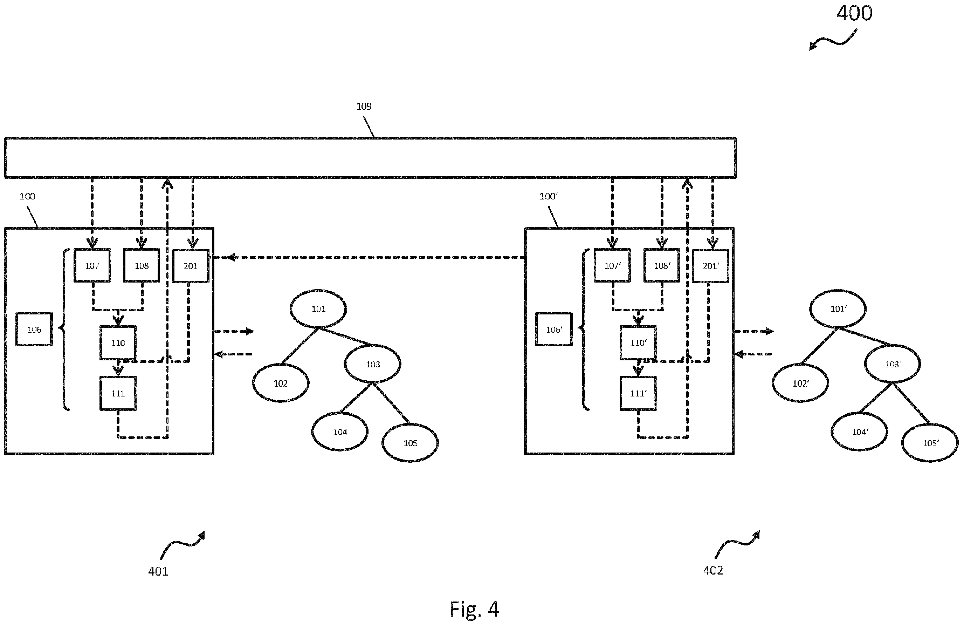

FIG. 4 shows a schematic view of a system according to an embodiment of the present invention. The system 400 in particular includes all features and functionality of the system 112 as described above. To this end, similar features are labelled with similar reference signs.

While the system 112 comprises a storage 109, a first device 100, a first entity instance 101 and a second entity instance 102, the system 400 further comprises a second device 100' which provides the same features and functionality as the device 100. In the system 400, the first device 100 and the first entity instance 101 are assigned to a first inventory 401, the second device 100' and the second entity instance 101' are assigned to a second inventory 402, and the first device 100 is configured to receive entity information 201 including version information regarding the second entity instance 101' from the second device 100'.

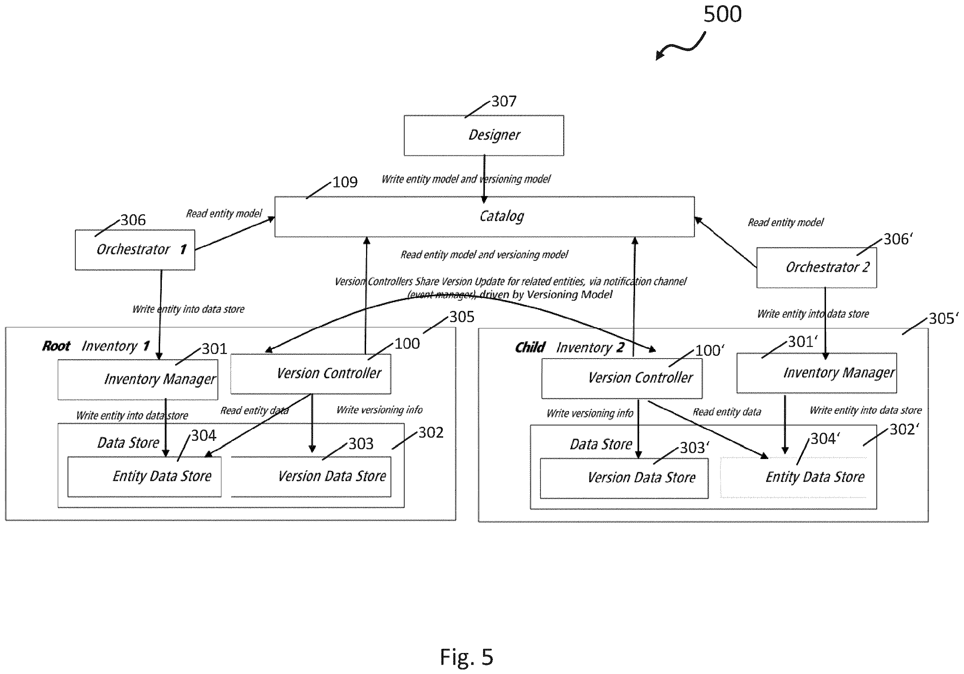

FIG. 5 shows a schematic view of a system 500 according to an embodiment of the present invention in more detail. The system 500 includes all features and functionality as the system 112 or the system 400 described above.

The system 500 implements the idea of distributed and hierarchical inventories, to which the concept of version management driven by an entity model and a versioning model is applied.

Features of Fig. 5, which are labelled with reference signs that have been used before in this document, implement the respective function that was described beforehand.

The child inventory 305' includes a second device 100', an inventory manager 301', a data store 302', a version data store 303' and an entity data store 304', which work according to the above described operating principle of the inventory 305. In Fig. 5, the inventory 305 is a root inventory 305.

The first device 100 and the second device 100' can exchange information regarding entity instances which are located in the root inventory 305, respectively in the child inventory 305'.

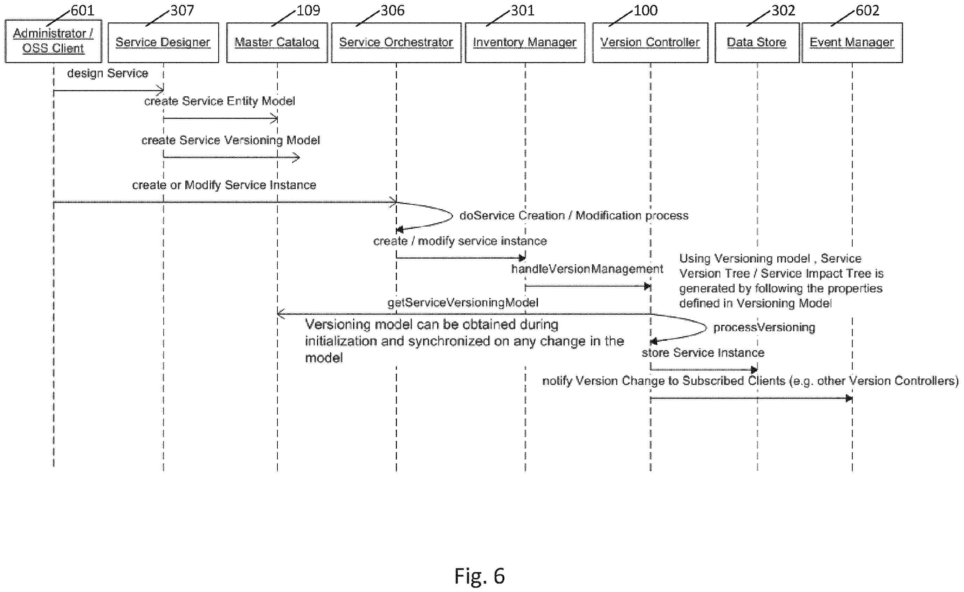

FIG. 6 shows a schematic view of an operating manner of the device or system according to an embodiment of the present invention.

Fig. 6 in particular shows operating steps involved in operating the system 400 or 500 with respect to version management.

As it is shown in Fig. 6, first a versioning model 108 is defined (by a service designer 307) that describes a relationship of service entities, which will be used for version control. The versioning model 108 defines which service entities are included in versioning, in addition to the service entity model 107, which describes all present service entities. The service versioning model 108 is orthogonal to an entity relationship model. The service designer 307 defines the versioning model 108 and stores it in the catalog 109.

Further, the version controller 100 reads the versioning model 108 and information regarding the entity instances and assigns versions to the entity instances based on the versioning model 108, for any change of an entity instance. To this end, an instance versioning model 110 was generated from the entity model 107 and the versioning model 108.

Any creation or modification of a service instance is notified by the inventory manager 301 to the version controller 100, which takes care of version management based on the versioning model 108.

The version controller 100 sends a notification in an event channel about a version update, which can be received by other version controllers 100' in the hierarchical management systems.

When there is a need for change in the relationship of entities involved in versioning, it can be done by changing the versioning model 108 independently from the entity model 107.

The key point is the definition and usage of the versioning model 108 that defines the relationship between a subset of entities of an entity tree (i.e. the entity model 107).

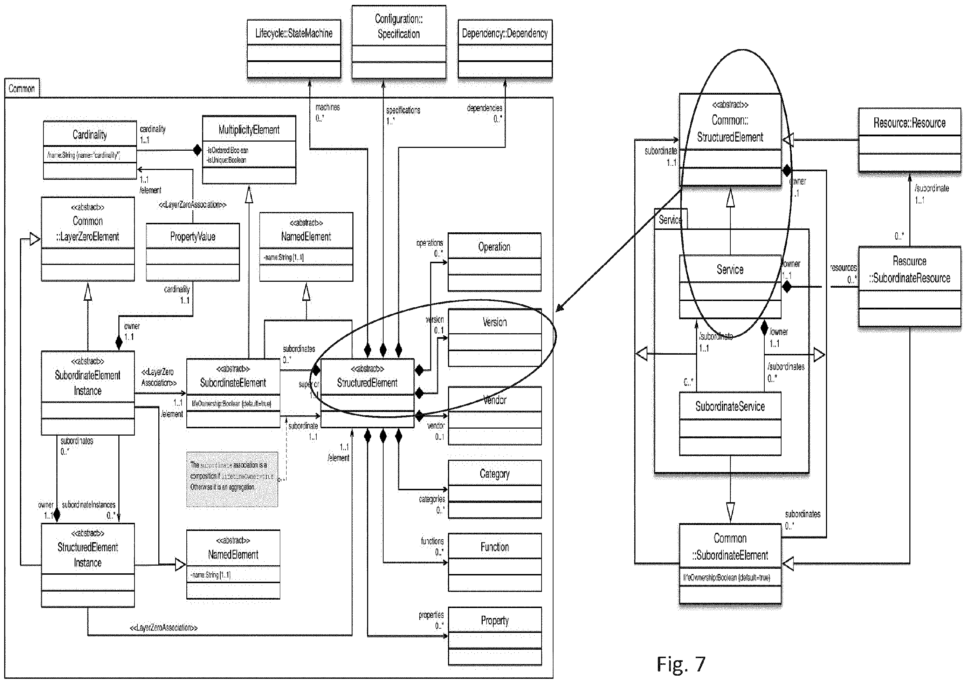

FIG. 7 schematically shows how a version is associated to a service instance. In most management system, managed entities (i.e. managed elements) are modeled including their properties, behavior and their relationships. This can be referred to as a managed object model. To have information about an entity instance (e.g. a service instance) and to control any of the entity instances, the managed object model is used by the management system.

For example, in a service management system or a service orchestrator, a service is a managed entity instance. The service entity instance has its own model that defines the properties of a service instance and its relationship with the other service instances. This model can be called a conventional service entity model, and is known in the prior art.

In the present invention, a service is taken as an example reference to illustrate the concept of version management. However, this concept can be applied to any entity or entity instance, that has a relationship with other entities and that goes through configuration changes, during a lifecycle. For example, the concept can be applied to any kind of resource or product.

In the prior art, and as shown in Fig. 7, a service definition for one particular service type (e.g.: a network resource, a firewall, a service, etc.) is defined by a designer by user input. Each state in the lifecycle of the service type is referred to by a unique version. A version associated with a service is created during design time. In the above conventional service entity model, a version defines a service type version, which is defined at design time. It doesn't refer to the version in the service instance history that has to be tracked at runtime.

The conventional service entity model is extended to support the versioning of service instances at runtime. Primarily, this involves two aspects: 1.: Properties in the service entity model to adjust a scope of the versioning. 2.: Addition of a version container entity in the model, to store the history for service instances.
1. Properties in the service entity model to scope the versioning: In the conventional service entity model, in the SubordinateService Element, the properties listed below are defined to support the versioning model.

Property: IsParentServiceImpacted:
- IsParentServiceImpacted = true - This represents that any change in the subordinate service (child service) in the tree will lead to a change in the behavior of the parent service.
- IsParentServiceImpacted = false - This represents that any change in the subordinate service (child service) in the tree will not lead to a change in the behavior of the parent service.

Property: lifeCycleOwnership:
- lifeOwnership = true - This kind of association does imply lifecycle responsibility. In this case the associated subordinate entity (in this example, services) are created when the root entity (in this example, service) is created and destroyed when the root entity is destroyed.
- lifeOwnership = false - This kind of association doesn't imply lifecycle responsibility. The associated subordinate entities are created/destroyed independently from the root entity creation/destruction.

The present invention is not limited only to the above two properties. Other similar properties that describe the impact of a service on another one are to be considered. The relationship of a service to another one can be defined also in other form of properties (like hasToBeConsideredInVersioning, isRelated, etc.).

Using the above properties, the device 100 generates an instance versioning model (which can also be referred to as service versioning tree or service impact tree in this scope) at runtime, when a service instance is created or modified.

In the service entity model according to the present invention, these properties can be defined initially at the design time of the service entity. Defining the values for these properties on the service instances can also be defined at runtime by using the dependency element defined as part of the service entity model. At runtime, the instance versioning model can be provided by having an external API interface or by a configuration tool.

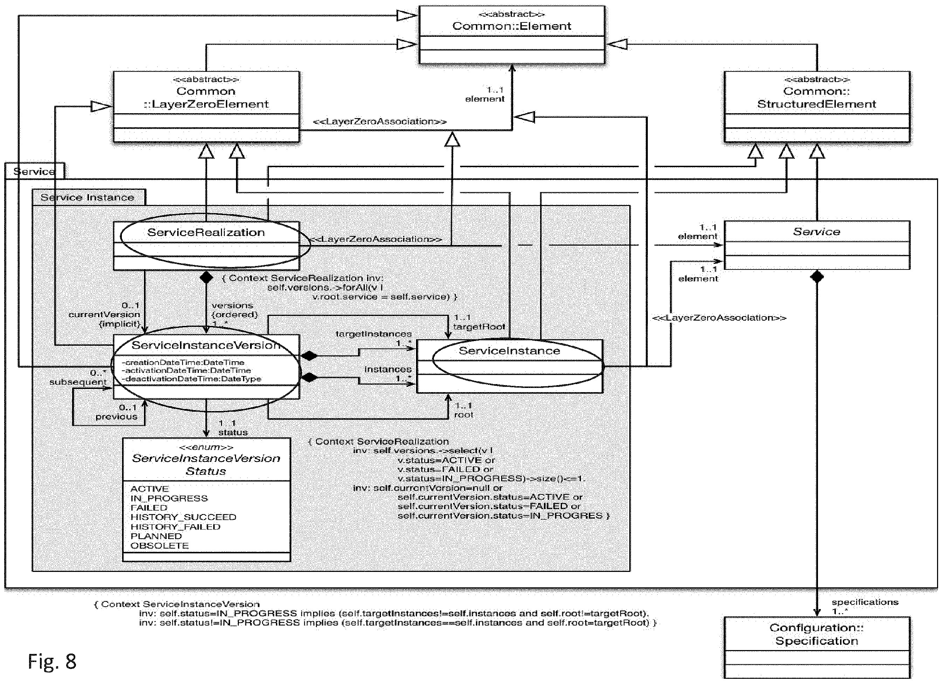

FIG. 8 shows a schematic view of a version container model. In Fig. 8, the above mentioned second step of adding of a version container entity in the model, to store the history for service instances, is described.

To track the specific versions of the service instances affected from changes (which are defined to be included in versioning in the versioning model 108), an entity referred to as service realization is defined. The service realization is a container for the history of a service instance and includes all related service instances in the service instance tree. All versions of a service instance are added to the service realization.

One or more service instances for a particular service type may go through a sequence of updates on various sub-elements. One particular service instance version represents a snapshot of the service instances, which includes service instance at a root and it's SubordinateServiceInstances (i.e. child instances) that are parts of the service versioning tree (i.e. the service impact tree).

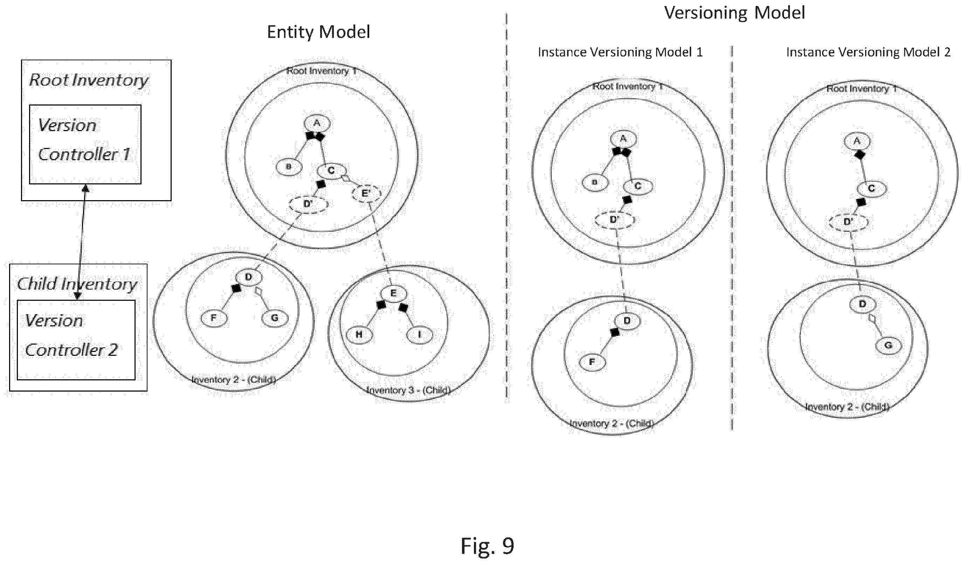

FIG. 9 shows schematic views of an entity model 107 and of an instance versioning model 110. In Fig. 9, items A, B, C, D, E, F, G, H and I are entities (e.g. service entities). The relationship shown between the entities follows a UML representation for strong composition and shared aggregation. D' and E' are remote references for the entities D and E respectively, which are stored in other inventories.

In a logic representation, in which the above entities are running instances, any change applied to instance E or G does not have direct impact on instance A, as they are in a shared relationship. Hence, the change in E or G is not expected to have impact on the versioning of instance A. Any change applied to instance C, B, D or F has direct impact on instance A, as they are in a strong composition relationship. Hence, any change in C, B, D, F is expected to have an impact on the versioning of instance A.

In the above figure, two different instance versioning models 110 are provided. The instance versioning model 110 can be applied dynamically at any later point of time to create a new versioning system. When instance versioning model 1 is applied, any change in F leads to a new version in A. But, a change in G does not impact versioning of A.

When instance versioning model 2 is applied, any change in G will lead to a new version in A. But a change in F does not impact versioning of A.

In a hierarchical management system as e.g. described in view of Fig. 5, multiple version controllers 100, 100' across distributed nodes can follow the instance versioning model 110 to implement the versioning system 500.

When there is any change in the versioning of an instance in the scope of a version controller, the version controller can post a change message in an event channel. The message is received by another version controller that subscribed to those events.

In the above example, when there is any change in a version for an instance in version controller 100', the change information is posted in an event channel. The information is received by version controller 100. Then, the version controller 100 uses the instance versioning model to handle the version change in its own system.

In Fig. 9, two instance versioning models are provided as an example. When instance versioning model 1 is applied, any change in F (that resides in inventory 2, i.e. a child inventory) leads to a new version in A (that resides in inventory 1, i.e. a root inventory). But, a change in G (that resides in inventory 2) does not impact versioning of A. When instance versioning model 2 is applied, any change in G (that resides in inventory 2) will lead to a new version of A. But a change in F (that resides in inventory 2) does not impact versioning of A.

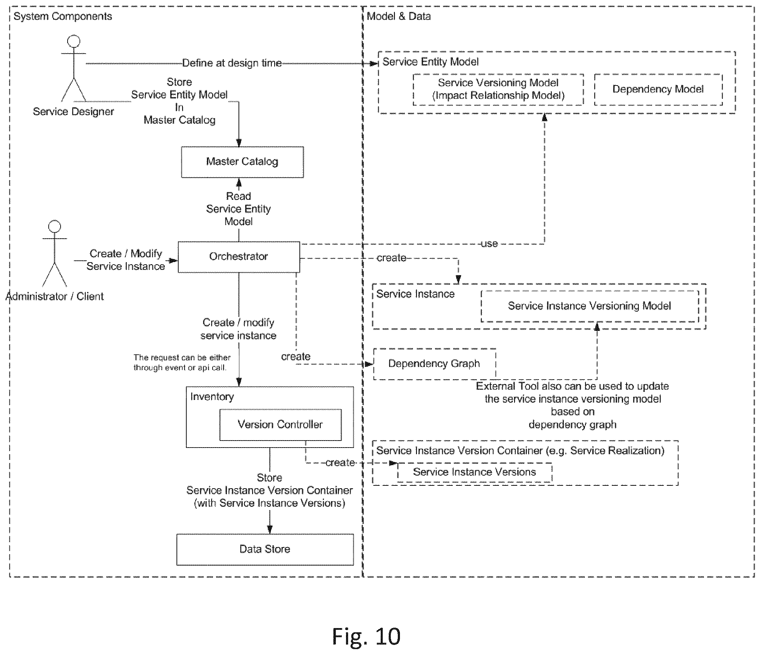

Fig. 10 shows a schematic view of a method for version management. As it is shown in Fig. 10, a service designer can define, at design time, a service entity model. The service entity model includes a service versioning model (e.g. an impact relationship model) and a dependency model. The service designer also can store the service entity model in a master catalog.

An administrator or client can create or modify service instances by controlling an orchestrator. The orchestrator can read the service entity model from the master catalog and can create or modify a service instance, which is stored in an inventory.

The orchestrator also can create a dependency graph. Both the service instance and the dependency graph can relate to an instance versioning model.

To store versions that are assigned to service instances, the version controller in the inventory can create service instance versions and store them in a service instance version container. The service instance version container in turn is located in a data store.

Another specific embodiment of the present invention, provides an alternative method for version control: Instead of following a version-based change history trace, changes can be directly tracked for entities. For every change on an entity instance, using a dependency graph, the changes on related entities can be tracked in a given interval. However, this is complicated as a relevant interval can vary for different entities.

A relationship between one or more entities can be defined in different ways. The method listed here, as properties of service entities and subordinate service entities, is just one of the way, to which the invention is not limited.

Instead of having a version container, other methods mentioned in the prior art can be followed for storing versions assigned to entity instances.

In another specific embodiment, the invention provides a version controller 100 in combination with a versioning model 108 and a designer that can be an independent software component that can be plugged in any inventory system or a repository to keep track of the history of the system or repository.

The device 100 (i.e. the version controller 100) as described above can in particular be used in any inventory management system, version control system, impact analysis system, or root cause analysis system.

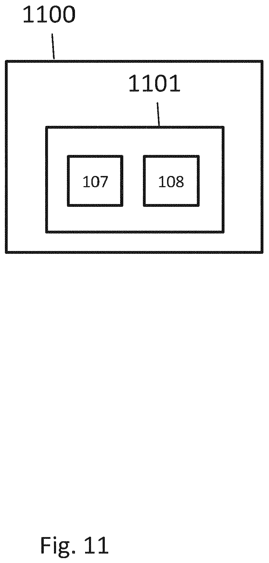

FIG. 11 shows a schematic view of a storage 1100 storing a data structure 1101 according to an embodiment of the present invention. As it is shown in Fig. 11, the storage 1100 stores the data structure 1101, wherein the data structure 1101 includes an entity model 107 and a versioning model 108.

The entity model 107 describes a plurality of entities and a relationship of each entity in the plurality of entities. The versioning model 108 describes a relationship for versioning of entities in the entity model 107. Optionally, the entity model 107 further includes a version container model for storing at least one version container instance in a version container entity, wherein the version container instance relates to a version of an entity instance.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100) for version management of a plurality of entity instances (101, 102, 103, 104, 105), the device comprising a processor (106) configured to:
- read an entity model (107) and a versioning model (108) from a storage (109),
wherein the entity model (107) describes a plurality of entities and a relationship of each entity in the plurality of entities, and
wherein the versioning model (108) describes a relationship for versioning of entities in the entity model,
- generate an instance versioning model (110), based on the entity model (107) and the versioning model (108),
wherein the instance versioning model (110) describes a relationship of a first entity instance (101) and a second entity instance (102),
- assign, in case of a version change of the first entity instance (101) or the second entity instance (102), a
new version (111) to the first entity instance (101), based on the instance versioning model (110), and
- store the new version (111) in the storage (109),
wherein each entity in the plurality of entities comprises a logical representation of a service;
wherein each entity instance (101, 102, 103, 104, 105) is a physical representation of an entity, that is described in the entity model (107);
wherein the versioning model 108 defines, which of the entities in the entity model 107 are included in versioning;
wherein the instance versioning model 110 describes, which entity instances (101, 102, 103, 104, 105) are included in versioning.

2. The device (100) according to claim 1, wherein the device is further configured to
- receive entity information (201) provided to the device (100), wherein the entity information (201) includes version information regarding the first entity instance (101) and/or the second entity instance (102).

3. The device (100) according to claim 1 or 2, wherein the processor (106) is further configured to
- determine the version change of the first entity instance (101) or the second entity instance (102), based on the entity information (201).

4. The device (100) according to any one of the preceding claims, wherein the processor (106) is further configured to
- assign the new version (111) to the first entity instance (101) based on the entity information (201).

5. The device (100) according to any one of the preceding claims, wherein the new version (111) includes version information regarding the first entity instance (101) and the second entity instance (102).

6. The device (100) according to any one of the preceding claims, wherein the second instance (102) is a child instance and the first instance is a parent instance (101), directly or indirectly depending on the child instance (102).

7. The device (100) according to any one of the preceding claims, wherein the dependency of the parent instance (101) on the child instance (102) is described by means of a tree structure in the instance versioning model (110).

8. The device (100) according to any one of the preceding claims, wherein the entity model (107) further describes at least one inventory (202, 203, 204) being a logical or physical unit to which entities or entity instances (101, 102, 103, 104, 105, 205, 206, 207, 208, 209, 210) can be assigned.

9. The device (100) according to claim 8, wherein the entity model (107) further describes a first inventory (202), and wherein the first entity instance (101) and the second entity instance (102) are assigned to the first inventory (202).

10. The device (100) according to claim 8, wherein the entity model (107) further describes a first inventory (202) and a second inventory (203), wherein the first entity instance (101) is assigned to the first inventory (202), and wherein the second entity instance (206) is assigned to the second inventory (203).

11. The device (100) according to any one of the preceding claims, wherein a relationship of the first entity instance (101) and the second entity instance (102) corresponds to a relationship defined in the entity model (107) and to a relationship defined in the versioning model (108).

12. The device (100) according to any one of the preceding claims, wherein an entity includes a service and/or a resource and/or a product.

13. A system (112) for version management of a plurality of entity instances (101, 102, 103, 104, 105), wherein the system (112) comprises
- a storage (109),
- a first device (100) according to any one of claims 1 to 12, and
- a first entity instance (101) and a second entity instance (102).

14. The system (400) according to claim 13, wherein the first device (100) is configured to receive entity information (201) including version information regarding the first entity instance (101) from the storage (109).

15. The system (400) according to claim 13 or 14, wherein the system (400) further comprises
- a second device (100') according to any one of claims 1 to 12, and
wherein the first device (100) and the first entity instance (101) are assigned to a first inventory (401), the second device (100') and the second entity instance (101') are assigned to a second inventory (402), and the first device (100) is configured to receive entity information (201) including version information regarding the second entity instance (101') from the second device (100').

## Patentansprüche

1. Vorrichtung (100) für eine Versionsverwaltung einer Mehrzahl von Entitätsinstanzen (101, 102, 103, 104, 105), wobei die Vorrichtung einen Prozessor (106) umfasst, der zu Folgendem konfiguriert ist:
- Auslesen eines Entitätsmodells (107) und eines Versionierungsmodells (108) aus einem Speicher (109),
wobei das Entitätsmodell (107) eine Mehrzahl von Entitäten und eine Beziehung jeder Entität in der Mehrzahl von Entitäten beschreibt, und
wobei das Versionierungsmodell (108) eine Beziehung für eine Versionierung von Entitäten in dem Entitätsmodell beschreibt,
- Erzeugen eines Instanzversionierungsmodells (110) basierend auf dem Entitätsmodell (107) und dem Versionierungsmodell (108),
wobei das Instanzversionierungsmodell (110) eine Beziehung einer ersten Entitätsinstanz (101) und einer zweiten Entitätsinstanz (102) beschreibt,
- Zuweisen, im Fall einer Versionsänderung der ersten Entitätsinstanz (101) oder der zweiten Entitätsinstanz (102), einer
neuen Version (111) zu der ersten Entitätsinstanz (101) basierend auf dem Instanzversionierungsmodell (110), und
- Speichern der neuen Version (111) in dem Speicher (109),
wobei jede Entität in der Mehrzahl von Entitäten eine logische Darstellung eines Dienstes umfasst;
wobei jede Entitätsinstanz (101, 102, 103, 104, 105) eine physische Darstellung einer Entität ist, die in dem Entitätsmodell (107) beschrieben ist;
wobei das Versionierungsmodell 108 definiert, welche der Entitäten in dem Entitätsmodell 107 bei einer Versionierung beinhaltet sind;
wobei das Instanzversionierungsmodell 110 beschreibt, welche Entitätsinstanzen (101, 102, 103, 104, 105) bei einer Versionierung beinhaltet sind.

2. Vorrichtung (100) nach Anspruch 1, wobei die Vorrichtung ferner zu Folgendem konfiguriert ist:
- Empfangen einer zu der Vorrichtung (100) bereitgestellten Entitätsinformation (201), wobei die Entitätsinformation (201) eine Versionsinformation hinsichtlich der ersten Entitätsinstanz (101) und/oder der zweiten Entitätsinstanz (102) beinhaltet.

3. Vorrichtung (100) nach Anspruch 1 oder 2, wobei der Prozessor (106) ferner zu Folgendem konfiguriert ist:
- Bestimmen der Versionsänderung der ersten Entitätsinstanz (101) oder der zweiten Entitätsinstanz (102) basierend auf der Entitätsinformation (201).

4. Vorrichtung (100) nach einem der vorhergehenden Ansprüche, wobei der Prozessor (106) ferner zu Folgendem konfiguriert ist:
- Zuweisen der neuen Version (111) zu der ersten Entitätsinstanz (101) basierend auf der Entitätsinformation (201).

5. Vorrichtung (100) nach einem der vorhergehenden Ansprüche, wobei die neue Version (111) eine Versionsinformation hinsichtlich der ersten Entitätsinstanz (101) und der zweiten Entitätsinstanz (102) beinhaltet.

6. Vorrichtung (100) nach einem der vorhergehenden Ansprüche, wobei die zweite Instanz (102) eine untergeordnete Instanz ist und die erste Instanz eine übergeordnete Instanz (101) ist, die direkt oder indirekt von der untergeordneten Instanz (102) abhängig ist.

7. Vorrichtung (100) nach einem der vorhergehenden Ansprüche, wobei die Abhängigkeit der übergeordneten Instanz (101) von der untergeordneten Instanz (102) mittels einer Baumstruktur in dem Instanzversionierungsmodell (110) beschrieben ist.

8. Vorrichtung (100) nach einem der vorhergehenden Ansprüche, wobei das Entitätsmodell (107) ferner mindestens ein Inventar (202, 203, 204) beschreibt, das eine logische oder physische Einheit ist, der Entitäten oder Entitätsinstanzen (101, 102, 103, 104, 105, 205, 206, 207, 208, 209, 210) zugewiesen werden können.

9. Vorrichtung (100) nach Anspruch 8, wobei das Entitätsmodell (107) ferner ein erstes Inventar (202) beschreibt, und wobei die erste Entitätsinstanz (101) und die zweite Entitätsinstanz (102) dem ersten Inventar (202) zugewiesen sind.

10. Vorrichtung (100) nach Anspruch 8, wobei das Entitätsmodell (107) ferner ein erstes Inventar (202) und ein zweites Inventar (203) beschreibt, wobei die erste Entitätsinstanz (101) dem ersten Inventar (202) zugewiesen ist, und wobei die zweite Entitätsinstanz (206) dem zweiten Inventar (203) zugewiesen ist.

11. Vorrichtung (100) nach einem der vorhergehenden Ansprüche, wobei eine Beziehung der ersten Entitätsinstanz (101) und der zweiten Entitätsinstanz (102) einer Beziehung, die in dem Entitätsmodell (107) definiert ist, und einer Beziehung, die in dem Versionierungsmodell (108) definiert ist, entspricht.

12. Vorrichtung (100) nach einem der vorhergehenden Ansprüche, wobei eine Entität einen Dienst und/oder eine Ressource und/oder ein Produkt beinhaltet.

13. System (112) für eine Versionsverwaltung einer Mehrzahl von Entitätsinstanzen (101, 102, 103, 104, 105), wobei das System (112) Folgendes umfasst:
- einen Speicher (109),
- eine erste Vorrichtung (100) nach einem der Ansprüche 1 bis 12, und
- eine erste Entitätsinstanz (101) und eine zweite Entitätsinstanz (102).

14. System (400) nach Anspruch 13, wobei die erste Vorrichtung (100) dazu konfiguriert ist, eine Entitätsinformation (201), die eine Versionsinformation hinsichtlich der ersten Entitätsinstanz (101) beinhaltet, von dem Speicher (109) zu empfangen.

15. System (400) nach Anspruch 13 oder 14, wobei das System (400) ferner Folgendes umfasst:
- eine zweite Vorrichtung (100') nach einem der Ansprüche 1 bis 12, und
wobei die erste Vorrichtung (100) und die erste Entitätsinstanz (101) einem ersten Inventar (401) zugewiesen sind, die zweite Vorrichtung (100') und die zweite Entitätsinstanz (101') einem zweiten Inventar (402) zugewiesen sind und die erste Vorrichtung (100) dazu konfiguriert ist, eine Entitätsinformation (201), die eine Versionsinformation hinsichtlich der zweiten Entitätsinstanz (101') beinhaltet, von der zweiten Vorrichtung (100') zu empfangen.

## Revendications

1. Dispositif (100) de gestion de versions d'une pluralité d'instances d'entité (101, 102, 103, 104, 105), le dispositif comprenant un processeur (106) configuré pour :
- lire un modèle d'entité (107) et un modèle de versionnage (108) à partir d'un stockage (109),
le modèle d'entité (107) décrivant une pluralité d'entités et une relation de chaque entité dans la pluralité d'entités, et
le modèle de versionnage (108) décrivant une relation pour un versionnage d'entités dans le modèle d'entité,
- générer un modèle de versionnage d'instance (110) sur la base du modèle d'entité (107) et du modèle de versionnage (108),
le modèle de versionnage d'instance (110) décrivant une relation d'une première instance d'entité (101) et d'une seconde instance d'entité (102),
- attribuer, en cas de changement de version de la première instance d'entité (101) ou de la seconde instance d'entité (102), une nouvelle version (111) à la première instance d'entité (101) sur la base du modèle de versionnage d'instance (110), et
- stocker la nouvelle version (111) dans le stockage (109),
chaque entité de la pluralité d'entités comprenant une représentation logique d'un service ;
chaque instance d'entité (101, 102, 103, 104, 105) étant une représentation physique d'une entité, qui est décrite dans le modèle d'entité (107) ;
le modèle de versionnage 108 définissant quelles entités du modèle d'entité 107 sont incluses dans le versionnage ;
le modèle de versionnage d'instance 110 décrivant quelles instances d'entité (101, 102, 103, 104, 105) sont incluses dans le versionnage.

2. Dispositif (100) selon la revendication 1, le dispositif étant en outre configuré pour :
- recevoir une information d'entité (201) fournie au dispositif (100), l'information d'entité (201) comportant une information de version concernant la première instance d'entité (101) et/ou la seconde instance d'entité (102).

3. Dispositif (100) selon la revendication 1 ou 2, dans lequel le processeur (106) est en outre configuré pour :
- déterminer le changement de version de la première instance d'entité (101) ou de la seconde instance d'entité (102) sur la base de l'information d'entité (201).

4. Dispositif (100) selon l'une quelconque des revendications précédentes, dans lequel le processeur (106) est en outre configuré pour :
- attribuer la nouvelle version (111) à la première instance d'entité (101) sur la base de l'information d'entité (201).

5. Dispositif (100) selon l'une quelconque des revendications précédentes, dans lequel la nouvelle version (111) comporte une information de version concernant la première instance d'entité (101) et la seconde instance d'entité (102).

6. Dispositif (100) selon l'une quelconque des revendications précédentes, dans lequel la seconde instance (102) est une instance enfant et la première instance est une instance parente (101), qui dépend directement ou indirectement de l'instance enfant (102).

7. Dispositif (100) selon l'une quelconque des revendications précédentes, dans lequel la dépendance de l'instance parente (101) vis-à-vis de l'instance enfant (102) est décrite au moyen d'une structure arborescente dans le modèle de versionnage d'instance (110).

8. Dispositif (100) selon l'une quelconque des revendications précédentes, dans lequel le modèle d'entité (107) décrit en outre au moins un inventaire (202, 203, 204) qui est une unité logique ou physique à laquelle des entités ou des instances d'entité (101, 102, 103, 104, 105,205,206,207, 208, 209, 210) peuvent être attribuées.

9. Dispositif (100) selon la revendication 8, dans lequel le modèle d'entité (107) décrit en outre un premier inventaire (202) et dans lequel la première instance d'entité (101) et la seconde instance d'entité (102) sont attribuées au premier inventaire (202).

10. Dispositif (100) selon la revendication 8, dans lequel le modèle d'entité (107) décrit en outre un premier inventaire (202) et un second inventaire (203), dans lequel la première instance d'entité (101) est attribuée au premier inventaire (202) et dans lequel la seconde instance d'entité (206) est attribuée au second inventaire (203).

11. Dispositif (100) selon l'une quelconque des revendications précédentes, dans lequel une relation de la première instance d'entité (101) et de la seconde instance d'entité (102) correspond à une relation définie dans le modèle d'entité (107) et à une relation définie dans le modèle de versionnage (108).

12. Dispositif (100) selon l'une quelconque des revendications précédentes, dans lequel une entité comporte un service et/ou une ressource et/ou un produit.

13. Système (112) de gestion de versions d'une pluralité d'instances d'entité (101, 102, 103, 104, 105), le système (112) comprenant :
- un stockage (109),
- un premier dispositif (100) selon l'une quelconque des revendications 1 à 12, et
- une première instance d'entité (101) et une seconde instance d'entité (102).

14. Système (400) selon la revendication 13, dans lequel le premier dispositif (100) est configuré pour recevoir une information d'entité (201) comportant une information de version concernant la première instance d'entité (101) en provenance du stockage (109).

15. Système (400) selon la revendication 13 ou 14, le système (400) comprenant en outre :
- un second dispositif (100') selon l'une quelconque des revendications 1 à 12, et
le premier dispositif (100) et la première instance d'entité (101) étant attribués à un premier inventaire (401), le second dispositif (100') et la seconde instance d'entité (101') étant attribués à un second inventaire (402), et le premier dispositif (100) étant configuré pour recevoir une information d'entité (201) comportant une information de version concernant la seconde instance d'entité (101') en provenance du second dispositif (100').
